(19) Europäisches Patentamt

European Patent Office

Office européen des brevets

(11) **EP 4 748 791 A1**

(12) **EUROPEAN PATENT APPLICATION**

(43) Date of publication:
**27.05.2026 Bulletin 2026/22**

(21) Application number: **25212581.0**

(22) Date of filing: **31.10.2025**

(51) International Patent Classification (IPC):
**C01B 33/021** (2006.01)  **C01B 33/00** (2006.01)
**C01B 33/023** (2006.01)  **H01M 4/134** (2010.01)
**H01M 4/38** (2006.01)

(52) Cooperative Patent Classification (CPC):
**H01M 4/386; C01B 33/00; C01B 33/021;
C01B 33/023; H01M 4/134; H01M 10/0525;**
H01M 2004/021; H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **25.11.2024 JP 2024204968**

(71) Applicant: **TOYOTA JIDOSHA KABUSHIKI
KAISHA**
**Toyota-shi, Aichi-ken 471-8571 (JP)**

(72) Inventors:
• **MASHIMO, Naohiro**
  **Toyota-shi, Aichi-ken, 471-8571 (JP)**
• **NOSE, Masafumi**
  **Toyota-shi, Aichi-ken, 471-8571 (JP)**
• **NOZAKI, Hiroo**
  **Toyota-shi, Aichi-ken, 471-8571 (JP)**

(74) Representative: **Winter, Brandl - Partnerschaft
mbB**
**Alois-Steinecker-Straße 22**
**85354 Freising (DE)**

(54) **POROUS SILICON MANUFACTURING METHOD, POROUS SILICON, NEGATIVE ELECTRODE LAYER, AND SECONDARY BATTERY**

(57)   A method of manufacturing a porous silicon, comprising: bringing a raw material containing a silicate into contact with an alkali earth metal gas; and bringing the raw material, which was brought into contact with the alkali earth metal gas, into contact with an acid.

FIG.1

**Description**

BACKGROUND

Technical Field

The present disclosure relates to a method for manufacturing a porous silicon, a porous silicon, a negative electrode layer, and a secondary battery.

Background Art

Silicon is attracting attention as a negative electrode active material due to having a high theoretical capacity. From among types of silicon, a higher energy density can be achieved in a battery when porous silicon is employed as the negative electrode active material. Known methods for manufacturing a porous silicon include a method in which porous silicon is obtained using Mg vapor generated by heating metallic Mg to reduce $SiO_2$ so as to generate an intermediate generation product including Si and MgO, and cleaning is then performed on the intermediate generation product with an acid to remove the MgO.

Japanese Patent Application Laid-Open (JP-A) No. 2023-76283 discloses a method for manufacturing porous silicon that is designed to perform reduction without generating $Mg_2Si$ and $SiO_2$ in the above porous silicon manufacturing method, and includes a reduction process in which an intermediate generation product including Si and MgO is obtained by contacting Mg vapor with a raw material containing $SiO_2$ under conditions of a reduced pressure and a Mg vapor pressure of not more than an equilibrium pressure of reaction equation ($Mg_2Si \Leftrightarrow 2Mg\,(g) + Si$), and a cleaning process in which MgO is removed from the intermediate generation product.

SUMMARY

However, in porous silicon produced using silicon monoxide or silicon dioxide, a void ratio derived from a pore volume as measured by a Barrett-Joyner-Halenda method (BJH method) cannot be described as being sufficiently high, and there has been demand for a porous silicon having an even higher void ratio. An object of the present disclosure is accordingly to provide a porous silicon manufacturing method, a porous silicon, a negative electrode layer, and a secondary battery that have a high void ratio as derived from a pore volume measured by a BJH method.

As a result of diligent investigations to achieve the above object, the present inventors have discovered that a porous silicon having a high void ratio as derived from a pore volume measured by a BJH method can be manufactured by using a silicate, and have completed the present disclosure. The present disclosure encompasses the following.

<1> A method of manufacturing a porous silicon, comprising: bringing a raw material containing a silicate into contact with an alkali earth metal gas; and bringing the raw material, which was brought into contact with the alkali earth metal gas, into contact with an acid.

<2> The method of manufacturing a porous silicon of <1>, wherein the silicate is an alkali metal silicate.

<3> The method of manufacturing a porous silicon of <1> or <2>, wherein the silicate is at least one compound selected from the group consisting of sodium silicate and lithium silicate.

<4> The method of manufacturing a porous silicon of any one of <1> to<3>, wherein the silicate is sodium silicate.

<5> The method of manufacturing a porous silicon of any one of <1> to <4>, wherein the alkali earth metal gas is a magnesium gas.

<6> A porous silicon, wherein: a void ratio calculated from a pore volume measured using a Barrett-Joyner-Halenda method (BJH method) is 66% or higher; and the porous silicon comprises an alkali metal at a content of 0.5% by mass or higher.

<7> The porous silicon of <6>, wherein the alkali metal is at least one chemical element selected from the group consisting of sodium and lithium.

<8> The porous silicon of <6> or <7>, wherein the pore volume is 0.8 cm3/g or higher.

<9> The porous silicon of any one of <6> to <8>, wherein a mean pore size is 15 nm or less.

<10> The porous silicon of any one of <6> to <9>, wherein a BET specific surface area is 70 m$^2$/g or higher.

<11> A negative electrode layer, comprising: a negative electrode active material layer including a negative electrode current collector, and the porous silicon of any one <6> to <10> as a negative electrode active material arranged on one face or both faces of the negative electrode current collector.

12. A secondary battery, comprising: the negative electrode layer of <11>; a positive electrode layer including a positive electrode current collector and a positive electrode active material layer, the positive electrode active material layer containing a positive electrode active material arranged on one face or both faces of the positive electrode current collector; and an electrolyte layer arranged between the negative electrode layer and the positive electrode layer.

<13> The secondary battery of <12>, wherein the electrolyte layer includes a solid electrolyte.

A porous silicon manufacturing method of the present disclosure enables manufacture of a porous silicon having a high void ratio calculated from a pore volume measured by a BJH method. Namely, a porous silicon of the present disclosure exhibits a feature of having a high void ratio as calculated from a pore volume measured by a BJH method. Moreover, a negative electrode layer and a secondary battery of the present disclosure may include a porous silicon having a high void ratio as calculated from a pore volume measured by a BJH method as a negative electrode active material.

BRIEF DESCRIPTION OF THE DRAWINGS

Exemplary embodiments of the present disclosure will be described in detail based on the following figures, wherein:

Fig. 1 schematically illustrates an embodiment of a secondary battery of the present disclosure, and is a cross-section of relevant portions thereof;
Fig. 2 is a characteristic diagram indicating void ratios related to porous silicon of Examples and Comparative Examples;
Fig. 3 is a characteristic diagram indicating a mean pore size as measured for porous silicon of Examples and Comparative Examples; and
Fig. 4 is a characteristic diagram indicating a BET specific surface area as measured for porous silicon of Examples and Comparative Examples.

DETAILED DESCRIPTION

Description follows regarding exemplary embodiments of the present disclosure. The description merely illustrates examples of exemplary embodiments, and does not limit the range of the present disclosure.

In the present specification a numerical range denoted using "to" indicates a range that includes the respective numerical values proceeding and following "to" as the minimum value and the maximum value thereof.

For a numerical range with a stepwise denotation in the present specification, an upper limit value or a lower limit value for one numerical range may be replaced with an upper limit value or a lower limit value for another stepwise numerical range. Moreover, in numerical ranges listed in the present specification, an upper limit value or a lower limit value of the numerical range may be replaced with a value indicated in an Example.

In the present specification the term "step" or "process" not only includes an isolated step or process, but as long as the intended objective of the step or process is achieved, the term may also include cases in which another step or process is unable to be clearly distinguished therefrom.

When an exemplary embodiment is described with reference to the drawings in the present specification, the configuration of the exemplary embodiment is not limited to the configuration illustrated in the drawings. Moreover, the size of members in the drawings is merely schematic, and relative relationships between the sizes of members is not limited thereto.

In the present specification, each component may include plural applicable materials. When reference is made to an amount of each component in a composition in the present exemplary embodiment, then unless explicitly stated otherwise, this means a total amount of plural materials present in the composition when there are plural qualifying materials present for each component in the composition.

Porous Silicon Manufacturing Method

A porous silicon manufacturing method of the present disclosure includes a step in which a raw material containing a silicate is brought into contact with an alkali earth metal gas, and a step in which the raw material that has been in contact with the alkali earth metal gas is brought into contact with an acid. The porous silicon manufacturing method of the present disclosure enables manufacture of a porous silicon having a high void ratio as calculated from a pore volume measured by a BJH method. The BJH method is implemented using a BELSORP MAX-034 produced by MicrotracBEL Corporation. The pore volume of the porous silicon manufactured by the porous silicon manufacturing method of the present disclosure can be measured using this BJH method. The void ratio of the porous silicon manufactured using the porous silicon manufacturing method of the present disclosure can be calculated based on a pore volume Vp measured by the BJH method. Specifically, the void ratio can be calculated by $Vp/(Vp + 1/2.33) \times 100$, since the true density of Si = 2.33 $g/cm^3$.

Reference to silicate means a salt comprising a silicic acid and a metal oxide. Silicic acid is a compound expressed by the general formula $[SiO_x(OH)_{4-2x}]_n$ (wherein x is an integer of 1 or 2, and n is a freely selected integer). Silicic acids include orthosilicic acid, pyrosilicic acid, metasilicic acid, and disilicic acid. From out of silicates, when the metal oxide is an alkali metal oxide is expressed by general equation $M_2O \cdot SiO_2$ (or when a hydrate, expressed by general equation $M_2O \cdot xSiO_2 \cdot yH_2O$ (wherein x and y are integers indicating the mol ratio of silicon dioxide and coordinated water, and M is an alkali metal). Examples that may be employed as the alkali metal include lithium, sodium, potassium, and the like. In particular, in the porous silicon manufacturing method of the present disclosure, an alkali metal silicate is preferable as the silicate, and from amongst these, at least one species of compound selected from out of the group consisting of sodium silicate and lithium silicate is more preferable, and sodium silicate is particularly preferable.

A size of the raw material containing a silicate according to the present disclosure is not particularly limited. An average primary particle size of the raw material containing a silicate may, for example, be at least 10 nm, at least 30 nm, at least 50 nm, at least 100 nm, or at least 150 nm, and may be not greater than 10 $\mu$m, not greater than 5 $\mu$m, not greater than 3 $\mu$m, not greater than 2 $\mu$m, or not greater than 1 $\mu$m. The raw material containing a silicate may have a part thereof that is formed with secondary particles. In such cases the average secondary particle size may, for example, be at least 100 nm, at least 1 $\mu$m, or at least 2 $\mu$m, and may be not greater than 20 $\mu$m, not to generate 15 $\mu$m, or not greater than 10 $\mu$m. The average primary particle size and the average secondary particle size are, for example, able to be appropriately adjusted by appropriately changing manufacturing conditions of the raw material containing a silicate, or by performing classification processing thereon. Note that the average primary particle size and the average secondary particle size of the raw material containing a silicate uses a D50 value, which is a particle size (median size) at a cumulative value of 50% in a volume-based particle distribution found using a laser diffraction analysis method.

In the porous silicon manufacturing method of the present disclosure, firstly a process is executed in which a raw material containing a silicate is brought into contact with an alkali earth metal gas (hereafter referred to as a reduction process), and then a process is executed in which the raw material after the reduction process is brought into contact with an acid (hereafter referred to as a cleaning process).

Reduction Process

In the reduction process an alkali earth metal gas is brought into contact with a raw material containing a silicate to reduce the silicic acid and the metal oxide in the raw material. For example, for a case in which the raw material containing a silicate is represented as $M_xSi_yO_z$ (wherein M is a metal) and Mg gas is employed as the alkali earth metal gas, an intermediate generation product containing Si and MgO is obtained in the reduction process as in the following equation. Equation: $M_xSi_yO_z + aMg \rightarrow ySi + aMgO + M_xO_{z-a}$. As illustrated by this equation, metal oxides of MgO and $M_xO_{z-a}$ are generated as the intermediate generation product by the reduction process.

The reduction process is not particularly limited, and may employ a vacuum furnace. In a vacuum furnace, for example, the temperature is heated up to a temperature at which an alkali earth metal gas is generated from an alkali earth metal under reduced internal pressure. The generated alkali earth metal gas is distributed inside the furnace, and the above reduction reaction proceeds by contact with the raw material.

Alkali Earth Metal Gas Generation Method

The alkali earth metal of the present disclosure encompasses beryllium, magnesium, calcium, strontium, barium, and radium. In particular in the present disclosure, preferably one chemical element selected from the group consisting of beryllium, magnesium, calcium, and strontium is employed, and more preferably one chemical element selected from the group consisting of magnesium and calcium is employed, with magnesium being most preferably employed. There is no particular limitation to the method of generating the alkali earth metal gas. Examples of the method of generating the alkali earth metal gas include, for example, a method in which an alkali earth metal or an alloy thereof is heated.

For example, when magnesium is employed as the alkali earth metal, for example, metalic magnesium (hereafter referred to as metal Mg), $Mg_2Si$, MgCa alloy, $MgCu_2$, $MgNi_2$, and MgSn alloys (hereafter also referred to as collectively as Mg alloys) may be employed. Such compounds are, for example, heated to a temperature of 600°C, 650°C, 700°C, or 800°C to generate a magnesium gas.

Temperature Conditions

The temperature of the above reduction reaction is not particularly limited and, for example, may be from 500°C to 900°C, is preferably from 550°C to 750°C, and is more preferably from 600°C to 700°C. In particular, making the reduction reaction temperature from 600°C to 700°C enables a smaller mean pore size to be achieved in the porous silicon manufactured.

Reaction Time

The reaction time of the above reduction reaction may be an appropriate time selected appropriately according to the above pressure conditions and the above temperature conditions. The reaction time of the above reduction reaction may, for example, be from 1 hour to 48 hours, is preferably from 3 hours to 24 hours, and is more preferably from 5 hours to 18 hours.

Cleaning Process

The following cleaning process is executed in the porous silicon manufacturing method of the present disclosure. The cleaning process is a process to remove MgO and $M_xO_{z-a}$ by processing the intermediate generation product obtained by the reduction reaction using an acid or the like. The targeted porous silicon is obtained by removing the MgO and $M_xO_{z-a}$ from the intermediate generation product. The acid employed in the cleaning process is not particularly limited, and may be any acid capable of removing the MgO and $M_xO_{z-a}$. Examples of the acid employed in the cleaning process include, for example, hydrochloric acid, nitric acid, and sulfuric acid. The concentration of the acid employed in the cleaning process can be an appropriate concentration appropriately selected according to the type of acid.
The cleaning process may, as necessary, include processing using distilled water, alcohol, or the like to further clean solid content after cleaning with acid. Moreover, the cleaning process may, as necessary, include processing to dry the solid content after cleaning.

Porous Silicon

The porous silicon of the present disclosure has a void ratio calculated from a pore volume measured using a Barrett-Joyner-Halenda method (BJH method) of not less than 66%, and an alkali metal content of not less than 0.5 % by weight. Such a porous silicon of the present disclosure is not particularly limited and, for example, may be manufactured by the porous silicon manufacturing method of the present disclosure as described above. The porous silicon of the present disclosure has a void ratio comparatively high compared to a porous silicon manufactured from a silicon oxide (SiO or $SiO_2$). From out of silicon oxides, the void ratio in a porous silicon manufactured from a SiO is about 48.3%, and the void ratio of porous silicon manufactured from $SiO_2$ is about 65.1%. In contrast thereto, a porous silicon of the present disclosure has a void ratio that achieves at least 66%. Note that in the porous silicon of the present disclosure the void ratio is preferably at least 70%, is more preferably at least 71%, and is even more preferably at least 72%.
A porous silicon of the present disclosure is well suited to being employed as a negative electrode active material of a secondary battery such as a lithium-ion secondary battery or the like due to having such a high void ratio. Expansion and contraction during charging and discharging a negative electrode layer that has employed such a porous silicon as the negative electrode active material is suppressed due to the porous silicon of the present disclosure having a high void ratio. This means that stable battery characteristics can be maintained by employing the porous silicon of the present disclosure. Note that a secondary battery such as a lithium-ion secondary battery or the like that has employed the porous silicon of the present disclosure may be a liquid-based secondary battery equipped with an electrolyte solution, or a solid-state battery equipped with a solid electrolyte layer, and a preferable embodiment is a fully solid-state battery equipped with a negative electrode layer containing the porous silicon of the present disclosure. Solid-state batteries include a fully solid-state battery including a solid electrolyte serving as an electrolyte between electrodes, a semi-solid battery including a gel layer containing an electrolyte solution and a polymer between electrodes and a solid electrolyte, in which the solid electrolyte may include an electrolyte solution at less than 10% by weight with respect to the total electrolyte amount. A solid electrolyte may be a composite solid electrolyte including an inorganic solid electrolyte and a polymer electrolyte.
The porous silicon of the present disclosure includes a metal derivative of a silicate due to being manufactured from a raw material containing a silicate. In particular, when an alkali metal silicate has been employed as the silicate contained in the raw material, the porous silicon of the present disclosure may contain an alkali metal at a content of 0.5% by weight or greater. Note that examples of such an alkali metal include lithium, sodium, potassium, and the like. In particular, in the porous silicon of the present disclosure, as the silicate, an alkali metal silicate is preferable, and from out of these, at least one species of compound selected from out of the group consisting of sodium silicate and lithium silicate is more preferable, and sodium silicate is particularly preferable. This means that the porous silicon of the present disclosure may include sodium or lithium as the alkali metal at a content of 0.5 % by weight or greater. However, in the porous silicon of the present disclosure, due to the alkali metal being residual matter from the alkali metal oxide contained in the silicate, preferably the content of alkali metal is as small as possible and, for example, is preferably not more than 10% by weight, is more preferably not more than 5% by weight, even more preferably not more than 3% by weight, is yet even more preferably not more than 2% by weight, and not more than 1.5% by weight is yet further preferable thereto. In the porous silicon of the present disclosure, as long as the content of the alkali metal is within one of these ranges, the alkali metal oxide contained in the raw material becomes sufficient pores to enable the high void ratio described above to be achieved.

Moreover, the porous silicon of the present disclosure preferably has a pore volume of at least 0.8 $cm^3/g$ as measured by a BJH method, and more preferably at least 0.9 $cm^3/g$, even more preferably at least 1.0 $cm^3/g$, and yet more preferably at least 1.1 $cm^3/g$. The void ratio described above is able to be achieved by the pore volume of the porous silicon of the present disclosure being within one of these ranges.

Furthermore, the porous silicon of the present disclosure preferably has a mean pore size of not more than 15 nm, more preferably not more than 13 nm, and yet more preferably not more than 12 nm. A negative electrode layer having excellent durability to pressures applied in manufacturing processes of a secondary battery can be achieved by setting the mean pore size in the porous silicon of the present disclosure in one of these ranges. Namely, in a negative electrode layer that has employed such a porous silicon as the negative electrode active material, a high void ratio such as described above can be maintained even when pressed by specific pressures in the manufacturing processes of a secondary battery. Note that the mean pore size of the porous silicon can be measured by performing a meso pore analysis with a BJH method using BEL Master, which is software to analyze adsorption isotherms obtained by gas adsorption measurement.

Moreover, the porous silicon of the present disclosure preferably has a BET specific surface area of at least 70 $m^2/g$, more preferably 90 $m^2/g$, even more preferably 100 $m^2/g$, yet even more preferably 150 $m^2/g$, and further preferably at least 200 $m^2/g$. A negative electrode layer having excellent durability to pressures applied in a secondary battery manufacturing process can be achieved by setting the BET specific surface area of the porous silicon of the present disclosure to one of these ranges. Namely, in a negative electrode layer that has employed such a porous silicon as the negative electrode active material, a high void ratio such as described above can be maintained even when pressed by specific pressures of manufacturing processes of a secondary battery. The BET specific surface area of the porous silicon is a value measured using a BELSORP MAX produced by MicrotracBEL Corporation.

Negative Electrode Layer

The negative electrode layer of the present disclosure includes a negative electrode current collector, and a negative electrode active material layer that is arranged on one or both faces of the negative electrode current collector and that includes the porous silicon of the present disclosure. The negative electrode layer of the present disclosure is able to suppress expansion and contraction during charging and discharging due to including the porous silicon described above. Note that the negative electrode layer of the present disclosure may include arbitrary selected component(s) other than the porous silicon described above.

Solid Electrolyte

The negative electrode active material layer may contain a solid electrolyte as the arbitrary selected component. The following materials may be given as examples of solid electrolytes contained in the negative electrode active material layer.

Preferably at least one species of solid electrolyte selected from the solid electrolyte group consisting of a sulfide solid electrolyte, an oxide solid electrolyte, and a halogen solid electrolyte is contained in the solid electrolyte according to the present disclosure. In particular, preferably at least one solid electrolyte selected from the group consisting of a sulfide solid electrolyte and a halogen solid electrolyte is employed as the solid electrolyte according to the present disclosure.

As the sulfide solid electrolyte, preferably sulfur (S) is contained as a main component of anionic chemical elements, and furthermore in addition to S, for example, preferably Li chemical element, A chemical element, and S chemical element are contained. The A chemical element is at least one species selected from the group consisting of P, As, Sb, Si, Ge, Sn, B, Al, Ga, and In. The sulfide solid electrolyte may further contain at least one out of O or a halogen chemical element. Examples of the halogen chemical element (X) include, for example, F, Cl, Br, I, and the like. A composition of the sulfide solid electrolyte is not particularly limited and may, for example, be $xLi_2S \cdot (100-x)P_2S_5$ ($70 \le x \le 80$), $yLiI \cdot zLiBr \cdot (100-y-z)$ $(xLi_2S-(1-x)P_2S_5)$ (wherein $0.7 \le x \le 0.8$, $0 \le y \le 30$, $0 \le z \le 30$).

The sulfide solid electrolyte may include a composition as expressed by following Equation (1).

$$Li_{4-x}Ge_{1-x}P_xS_4 \text{ (wherein } 0 < x < 1) \qquad \ldots \text{Equation (1)}$$

In Equation (1), at least part of the Ge may be substituted by at least one element selected from the group consisting of Sb, Si, Sn, B, Al, Ga, In, Ti, Zr, V, and Nb. Moreover, at least part of the P may be substituted by at least one element selected from the group consisting of Sb, Si, Sn, B, Al, Ga, In, Ti, Zr, V, and Nb. Part of the Li may be substituted by at least one element selected from the group consisting of Na, K, Mg, Ca, and Zn. At least part of the S may be substituted by a halogen. The halogen is at least one out of F, Cl, Br, or I.

As the oxide solid electrolyte, preferably oxygen (O) is contained as a main component of the anion chemical element and, for example, Li, Q chemical element (wherein Q represents at least one species selected from the group consisting of Nb, B, Al, Si, P, Ti, Zr, Mo, W, and S), and O may be contained therein. Examples of the oxide solid electrolyte include a garnet type solid electrolyte, a perovskite type solid electrolyte, a NASICON type solid electrolyte, a Li-P-O based solid electrolyte, a Li-B-O based solid electrolyte, and the like. Examples of the garnet type solid electrolyte include, for example, $Li_7La_3Zr_2O_{12}$, $Li_{7-x}La_3(Zr_{2-x}Nb_x)O_{12}$ ($0 \le x \le 2$), $Li_5La_3Nb_2O_{12}$, and the like. Examples of the perovskite type solid electrolyte include, for example, (Li, La) $TiO_3$, (Li, La) $NBO_3$, (Li, Sr) (Ta, Zr) $O_3$, and the like. Examples of the NASICON type solid electrolyte include Li (Al, Ti) $(PO_4)_3$, Li(Al, Ga) $(PO_4)_3$, and the like. Examples of the Li-P-O based solid electrolytes include $Li_3PO_4$, LIPON (compounds in which part of the O in $Li_3PO_4$ has been substituted by N), examples of the Li-B-O based solid electrolytes include compounds in which part of the O in $Li_3BO_3$, $Li_3BO_3$ has been substituted by C.

Suitable examples of the halogen solid electrolyte are solid electrolytes including Li, M, and X (wherein M represents at least 1 element from out of Ti, Al, or Y, and X represents F, Cl, or Br). Specifically preferable are $Li_{6-3z}Y_zX_6$ (wherein X represents Cl or Br, and z satisfies $0 < z < 2$) and $Li_{6-(4-x)b}(Ti_{1-x}Al_x)_bF_6$ (wherein $0 < x < 1$, $0 < b \le 1.5$). From out of $Li_{6-3z}Y_zX_6$, $Li_3YX_6$ (X is Cl or Br) is more preferable from the perspective of having excellent lithium-ion conductivity, and $Li_3YCl_6$ is even more preferable. Moreover, $Li_{6-(4-x)b}(Ti_{1-x}Al_x)_bF_6$ (wherein $0 < x < 1$, $0 < b \le 1.5$) is, for example, preferably also contained in the solid electrolyte of the sulfide solid electrolyte or the like from the perspective of suppressing oxidative decomposition of the sulfide solid electrolyte.

Conduction Adjuvant

Moreover, the negative electrode active material layer may contain a conduction adjuvant as the arbitrary selected component. Examples of the conduction adjuvant include, for example: carbon materials such as vapor-grown carbon fibers (VGCF), acetylene black (AB), Ketjenblack (KB), carbon nano tubes (CNT), carbon nano fibers (CNF), and the like; and metal materials such as nickel, aluminum, stainless steel, and the like. The conduction adjuvant may, for example, be in a particle form or fiber form, and the size thereof is not particularly limited. The conduction adjuvant may be employed as one species thereof alone, or may be employed as a combination of two or more species thereof.

The negative electrode active material layer can be produced by coating the negative electrode current collector with slurry resulting from mixing the porous silicon of the present disclosure together with the arbitrary selected components, such as a solid electrolyte, conduction adjuvant, and the like. The slurry referred to here may be prepared by adding the porous silicon, and the freely selected components, such as a solid electrolyte, conduction adjuvant, and the like, to a resin solution or resin-dispersed solvent, and then kneading.

Resin

The resin is not particularly limited, and various resins that are known as secondary battery configuration materials may be employed therefor. Examples of the resin may, for example, be at least one species selected from a butadiene rubber (BR) based binder, a butyl rubber (IIR) based binder, an acrylate-butadiene rubber (ABR) based binder, a styrenebutadiene rubber (SBR) based binder, polyvinylidene fluoride (PVdF) based binder, a polytetrafluoroethylene (PTFE) based binder, a polyimide (PI) based binder, a carboxymethyl cellulose (CMC) based binder, a polyacryl acetate based binder, a polyacrylic acid ester based binder, and the like. In particular, the performance properties of a PVdF based binder are high. A PVdF based binder may be a copolymer including a unit derived from a monomer other than VdF. The polymer may be one species employed singly, or two or more species may be employed in combination.

Taking the negative electrode active material layer total (solid content total) as 100% by weight, the content of the porous silicon in the negative electrode active material layer may, for example, be at least 40% by weight, at least 50% by weight, at least 60% by weight, or at least 70% by weight, and may also be not greater than 100% by weight, or not greater than 90% by weight. The shape of the negative electrode active material layer is not particularly limited and may, for example, be a sheet shaped negative electrode active material layer having a substantially flat surface. The thickness of the negative electrode active material layer is not particularly limited and may, for example, be at least 0.1 $\mu$m, at least 1 $\mu$m, or at least 10 $\mu$m, and may also be not greater than 2 mm, not greater than 1 mm, or not greater than 500 $\mu$m.

Note that in the negative electrode layer of the present disclosure, the electrolyte contained in the negative electrode active material layer may be a solid electrolyte, may be a liquid electrolyte (electrolyte solution), or may be a combination thereof. In particular, even higher advantageous effects are readily obtained when the negative electrode active material layer contains at least a solid electrolyte as the electrolyte. Namely, the negative electrode layer of the present disclosure preferably contains the porous silicon described, and a solid electrolyte disposed at the periphery thereof. The negative electrode active material layer preferably is one that, from out of solid electrolytes, includes a sulfide solid electrolyte, and furthermore, preferably is one that, from out of these, includes a sulfide solid electrolyte containing Li, S, and P as configuration chemical elements thereof.

Any material that is generally employed as a negative electrode current collector in a battery may be employed as the negative electrode current collector. The negative electrode current collector may be in a foil form, a sheet form, a mesh form, a punched metal form, a foamed body, or the like. The negative electrode current collector may be a metal foil or a metal mesh, or may be a carbon sheet. The negative electrode current collector may be configured from plural sheets of foil or sheet. Examples of a metal configuring the negative electrode current collector include Cu, Ni, Cr, Au, Pt, Ag, Al, Fe, Ti, Zn, Co, stainless steel, and the like. In particular, from the perspective of securing reduction resistance and the perspective not being liable to alloy with lithium, the negative electrode current collector preferably includes at least one species of metal selected from Cu, Ni, or stainless steel. The negative electrode current collector may include some form of coating layer on the surface thereof, for an objective such as adjusting resistance. Moreover, the negative electrode current collector may be one of the above metals that has been plated or vapor deposited on a metal foil or on a substrate. Moreover, in cases in which the negative electrode current collector is configured from plural sheets of metal foil, some form of layer may be included between the plural sheets of metal foil. The thickness of the negative electrode current collector is not particularly limited. For example, the thickness may be at least 0.1 $\mu$m, or at least 1 $\mu$m, and may also be not greater than 1 mm, or not greater than 100 $\mu$m.

Secondary Battery

The secondary battery of the present disclosure includes the negative electrode layer described above, a positive electrode layer including a positive electrode current collector and a positive electrode active material layer including a positive electrode active material disposed on one or both faces of the positive electrode current collector, and an electrolyte layer disposed between the negative electrode layer and the positive electrode layer. The secondary battery of the present disclosure includes the negative electrode layer capable of suppressing expansion and contraction during charging and discharging, as described above, and is accordingly able to maintain excellent battery characteristics.

The positive electrode layer in the secondary battery of the present disclosure is not limited to any particular configuration, as long as the positive electrode layer is able to function appropriately as the positive electrode of the secondary battery. The positive electrode active material layer contains at least a positive electrode active material, and may further contain an electrolyte, a conduction adjuvant, a binder, and the like as arbitrary selected. The positive electrode active material layer may include other types of additive. Known materials employed as a positive electrode active material of a secondary battery may be employed as the positive electrode active material. Examples of the positive electrode active material include, for example, at least one species selected from various types of lithium containing compounds, elemental sulfur, sulfur compounds, and the like. A lithium containing compound serving as the positive electrode active material may be various types of lithium containing compound, such as a lithium cobalt oxide, a lithium nickel oxide, $Li_{1\pm\alpha}Ni_{1/3}Co_{1/3}Mn_{1/3}O_{2\pm\delta}$, a lithium manganate, a spinel based lithium compound (a heterogenous element substituted Li-Mn spinel or the like having a composition expressed by $Li_{1+x}Mn_{2-x-y}M_yO_4$ (wherein M is one or more species selected from Al, Mg, Co, Fe, Ni, or Zn), a lithium titanate, a lithium metal phosphate ($LiMPO_4$ or the like, wherein M is one or more species selected from Fe, Mn, Co, or Ni). In particular, even higher advantageous effects can be expected in cases in which the positive electrode active material is a lithium containing oxide including configuration chemical elements of at least Li, at least one element out of Ni, Co, or Mn, and O. The positive electrode active material may be a single species employed alone, or may be two or more species employed in combination.

The shape of the positive electrode active material may be any shape normally employed as a positive electrode active material for a battery. The positive electrode active material may, for example, be in particle form. The positive electrode active material may have a solid core, may have a hollow core, may include a void, and may be porous. The positive electrode active material may be primary particles, and may be secondary particles resulting from aggregation of plural primary particles. A protective layer containing an ionically conductive oxide may be formed on the surface of the positive electrode active material. This thereby facilitates suppression of a reaction or the like between the positive electrode active material and a sulfide (for example, a sulfide solid electrolyte). Examples of the ionically conductive oxide include, for example, $Li_3BO_3$, $LiBO_2$, $Li_2CO_3$, $LiAlO_2$, $Li_4SiO_4$, $Li_2SiO_3$, $Li_3PO_4$, $Li_2SO_4$, $Li_2TiO_3$, $Li_4Ti_5O_{l2}$, $Li_2Ti_2O_5$, $Li_2ZrO_3$, $LiNbO_3$, $Li_2MoO_4$, $Li_2WO_4$, or the like.

The electrolyte including a positive electrode active material layer may be a solid electrolyte, may be a liquid electrolyte (electrolyte solution), or may be a combination thereof. In particular, even higher advantageous effects can be expected when the positive electrode active material layer includes at least a solid electrolyte as the electrolyte. A solid electrolyte listed under "negative electrode layer" above may be employed. A conduction adjuvant contained in the positive electrode active material layer may employ one of those listed under "negative electrode layer" above. A resin contained in the positive electrode active material layer may employ one of those listed under "negative electrode layer" above.

The positive electrode current collector be any generally employed as a positive electrode current collector for a battery. Moreover, the positive electrode current collector may be in a foil form, a sheet form, a mesh form, a punched metal form, a foamed body, or the like. The positive electrode current collector may be configured by a metal foil or a metal mesh. In particular metal foils have excellent handling characteristics and the like. The positive electrode current collector may be configured from plural sheets of foil. Examples of a metal configuring the positive electrode current collector include Cu, Ni, Cr, Au, Pt, Ag, Al, Fe, Ti, Zn, Co, stainless steel, and the like. In particular, from a perspective such as ensuring oxidation resistance, the positive electrode current collector may include Al. The positive electrode current collector may include a coating layer of some sort on the surface thereof for an objective such as adjusting resistivity. Moreover, the positive electrode current collector may be formed by the above metal being plated or vapor deposited on a metal foil or on a substrate.

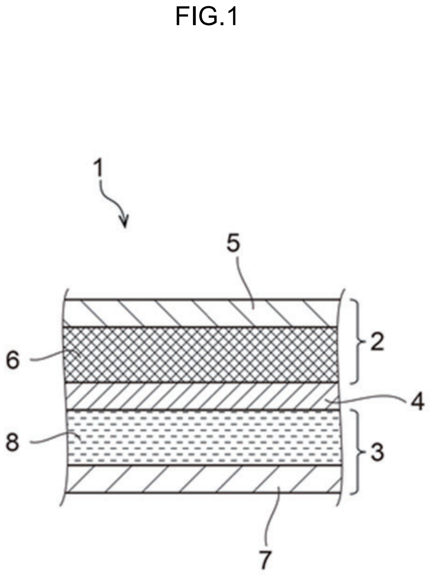

The electrolyte layer in the secondary battery of the present disclosure may be a layer including a solid electrolyte but does not include a liquid electrolyte, may be a layer including a liquid electrolyte (non-aqueous electrolyte solution) but does not include a solid electrolyte, and may be a layer including both a solid electrolyte and a liquid electrolyte. In an embodiment of the secondary battery of the present disclosure, a lithium-ion secondary battery 1 illustrated in Fig. 1 includes a positive electrode layer 2 including a positive electrode current collector 5 and a positive electrode active material layer 6, a negative electrode layer 3 including a negative electrode current collector 7 and a negative electrode active material layer 8, and an electrolyte layer 4 interposed between the positive electrode layer 2 and the negative electrode layer 3. Note that when the electrolyte layer 4 contains a liquid electrolyte, the electrolyte layer 4 preferably includes a separator to insulate between the positive electrode layer 2 and the negative electrode layer 3 while retaining the liquid electrolyte. Moreover, when the electrolyte layer 4 includes a solid electrolyte, the electrolyte layer 4 may include a freely selected binder or the like in addition to the solid electrolyte. In particular, when a negative electrode active material and a negative electrode of the present disclosure are employed, the electrolyte layer 4 preferably includes a solid electrolyte but does not include a liquid electrolyte, or includes a liquid electrolyte and a solid electrolyte.

The liquid electrolyte may employ, without limitation, any non-aqueous electrolyte solution normally employed in a non-aqueous lithium-ion secondary battery. Such a non-aqueous electrolyte solution may be a composition containing a supporting electrolyte in a non-aqueous solvent. The non-aqueous solvent may be a material selected from the group consisting of an organic electrolyte, a fluoro-based solvent, propylene carbonate (PC), ethylene carbonate (EC), diethyl carbonate (DEC), dimethyl carbonate (DMC), ethyl methyl carbonate (EMC), and a combination of two or more species thereof. Examples of the supporting electrolyte include a material selected from the group consisting of $Li(FSO_2)_2N$, $LiPF_6$, $LiBF_4$, $LiClO_4$, $LiAsF_6$, $LiCF_3SO_3$, $LiC_4F_9SO_3$, $LiN(CF_3SO_2)_2$, $LiC(CF_3SO_2)_3$, a LiI lithium compound (lithium salt), and a combination of two or more species thereof.

A separator employed in the liquid electrolyte may be any separator normally employed in a non-aqueous lithium-ion secondary battery and examples thereof include, for example, resins such as a polyethylene (PE), a polypropylene (PP), a polyester, and a polyamide. The separator may have a single layer structure, and may have a multilayer structure.

Detailed description follows regarding the present disclosure by way of Examples, however the technical scope of the present disclosure is not limited by the following Examples.

Example 1

Porous Silicon Manufacture

Sodium metasilicate ($Na_2SiO_3$ (produced by Kojundo Chemical Laboratory Co., Ltd)) was pulverized for 3 minutes using a mortar inside a glovebox having an atmosphere filled with argon gas. The particle size of the pulverized sodium metasilicate was measured with a scanning electron microscope (SEM) and found to be a mean particle size of 9.8 $\mu$m. Next, 1g of the pulverized sodium metasilicate was weighed out and placed inside a vacuum reaction furnace. Moreover, 2.55g of $Mg_2Si$ was placed inside the vacuum reaction furnace at a position below the position where the sodium metasilicate had been placed. The vacuum reaction furnace was taken out from the glovebox, and baking was performed for 12 hours at 850°C under vacuum conditions (about 80 Pa) (a reduction process). Note that speed of temperature rise inside the vacuum reaction furnace was 10°C/minute.

Next, the powder after reaction had finished was left to cool naturally. 88.5 ml of an aqueous solution of HCl at 6% by weight was mixed with 1g of the powder obtained, and a cleaning process was performed while stirring for 1 hour. Note that this task was executed inside a simple glovebox into which argon gas had been introduced. Then drying was performed for 12 hours at 120°C using a vacuum drier inside the glovebox having an atmosphere filled with argon gas. The porous silicon of Example 1 was produced as described above.

Example 2

Porous silicon was manufactured similarly to in Example 1, except in that baking conditions of the sodium metasilicate were 12 hours at 800°C.

Example 3

Porous silicon was manufactured similarly to in Example 1, except in that baking conditions of the sodium metasilicate were 12 hours at 700°C.

Example 4

Porous silicon was manufactured similarly to in Example 1, except in that the sodium metasilicate was not pulverized using a mortar. Note that the mean particle size of the sodium metasilicate employed in the present example was 30 $\mu$m.

Comparative Example 1

Porous silicon was manufactured similarly to in Example 1 except in that SiO$_2$ (product code: 010-70255, Kishida Chemical Co., Ltd.) was employed instead of sodium metasilicate.

Comparative Example 2

Porous silicon was manufactured similarly to in Comparative Example 1 except in that baking conditions of the SiO$_2$ were 12 hours at 700°C.

Physical Property Measurement

The BET specific surface area, the pore volume Vp, the mean pore size, and the BJH pore distribution peak were measured for the porous silicon in each of Example 1 to Example 4, and Comparative Example 1 and Comparative Example 2, and the void ratio was computed from the pore volume Vp. Moreover, the amount of sodium remaining was measured for the porous silicon in each of Example 1 to Example 4.

BET Specific Surface Area

Analysis was performed using a BET method with a range of 0.1 < P/P$_0$ < 0.25 with respect to an adsorption isotherm obtained by performing nitrogen gas adsorption measurement using a BELSORP MAX X of MicrotracBEL Corporation, and the specific surface area was computed.

Pore Volume Vp

The pore volume Vp was computed by meso pore analysis using a BJH method of the gas adsorption measurement results (adsorption side).

Mean Pore Size

The mean pore size was computed by meso pore analysis using a BJH method of the gas adsorption measurement results (adsorption side).

BJH Pore Distribution Peak

By analysis of the gas adsorption measurement results (adsorption side) using a BJH method, a dp indicating a maximum value was computed as a peak on a pore distribution graph having the obtained pore size dp on the horizontal axis, and having dVp/dlog (dp) on the vertical axis.

Void Ratio

By analysis of the gas adsorption measurement results using a BJH method, the pore volume Vp obtained therefrom was employed to compute the void ratio using equation Vp/(Vp + 1/2.33) $\times$ 100, since the true density of Si = 2.33 g/cm$^3$.

Remaining Sodium Amount

Powder was dissolved and an ICPS-8100 from Shimadzu Corporation was employed to quantify the remaining sodium amount through inductively coupled plasma atomic emission spectroscopy (ICP-AES measurement). A sample was dissolved by acid processing using nitric acid and hydrofluoric acid, and the Na concentration was computed from comparison with calibration curves for Na.

Results

The results measured for the above physical properties for the porous silicon of Example 1 to Example 4 and Comparative Example 1 and Comparative Example 2 are illustrated in Table 1.

Table 1

|  | BET Specific Surface Area (m²/g) | Pore Volume Vp | Mean Pore Size (nm) | BJH Pore Distribution Peak (nm) | Void Ratio (%) | Remaining Sodium Amount (weight %) |
|---|---|---|---|---|---|---|
| Example 1 | 63.8 | 1.1067 | 46.77 | 209.98 | 72.0562 | 1.33 |
| Example 2 | 74.6 | 1.0442 | 31.311 | 105.64 | 70.87084 | 1.75 |
| Example 3 | 230 | 1.0671 | 11.76 | 35.594 | 71.31665 | 2.61 |
| Example 4 | 110 | 0.8683 | 23.05 | 105.6 | 66.9218 | 9.71 |
| Comparative Example 1 | 10.3 | 0.1418 | 44.248 | >160 | 24.8343 | - |
| Comparative Example 2 | 69.9 | 0.3563 | 15.282 | 35.594 | 45.36054 | - |

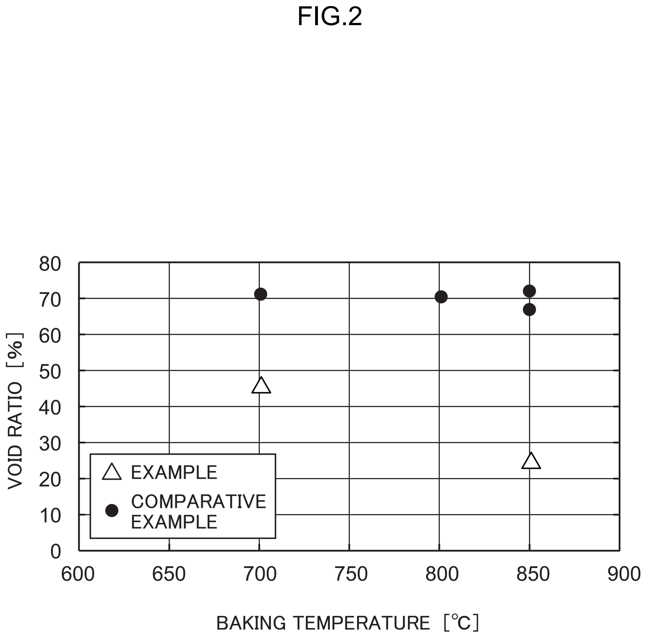

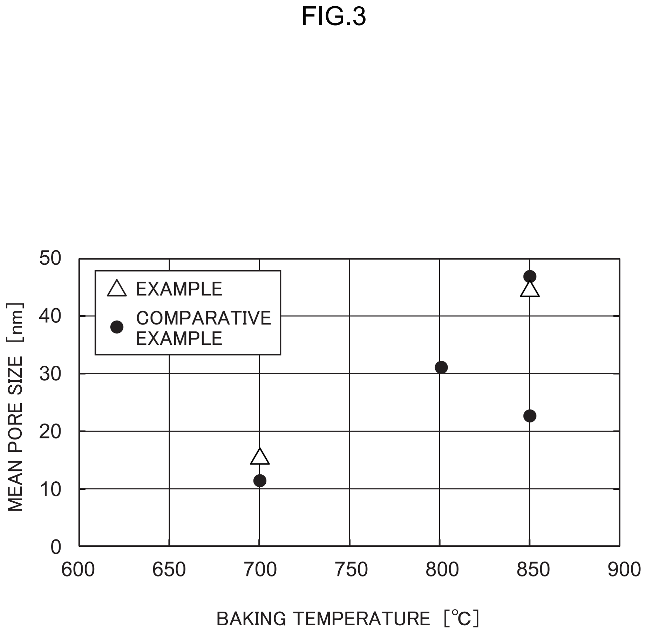

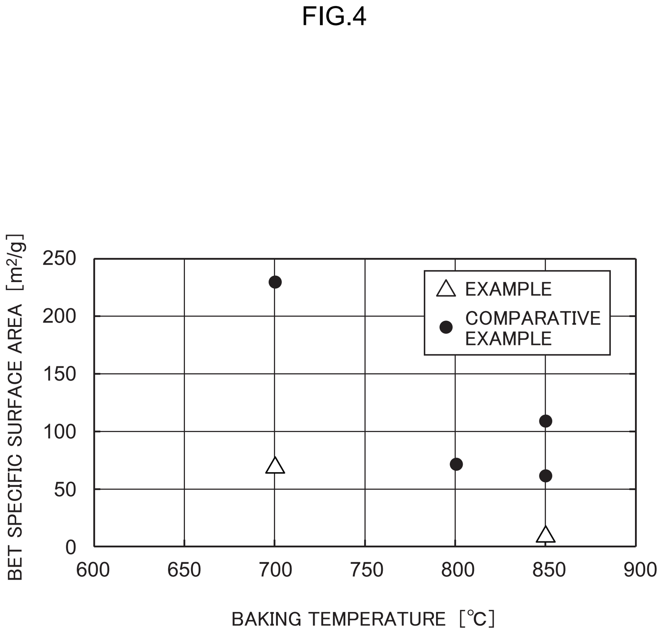

Moreover, the void ratios related to the porous silicon for each of Example 1 to Example 4 and Comparative Example 1 and Comparative Example 2 are illustrated in Fig. 2. Furthermore, the mean pore sizes measured for the porous silicon for each of Example 1 to Example 4 and Comparative Example 1 and Comparative Example 2 are illustrated in Fig. 3. Furthermore, the BET specific surface area measured for the porous silicon for each of Example 1 to Example 4 and Comparative Example 1 and Comparative Example 2 are illustrated in Fig. 4.

As illustrated in Table 1 and Fig. 2, it is apparent that when a raw material containing a silicate is employed, a porous silicon can be manufactured having a higher void ratio than when a raw material containing $SiO_2$ is employed. Moreover, as illustrated in Table 1 and Fig. 3, it is apparent that for both a raw material containing a silicate and a raw material containing $SiO_2$, the mean pore size of porous silicon is dependent on a baking temperature when the raw material is brought into contact with an alkali earth metal gas. Furthermore, as illustrated in Table 1 and Fig. 4, it is apparent that when a raw material containing a silicate was employed, a porous silicon can be manufactured having a higher BET specific surface area than when a raw material containing $SiO_2$ was employed. The above results illustrate that a porous silicon having a high void ratio can be obtained by using a raw material containing a silicate, that a negative electrode layer employing such a porous silicon has reduced expansion and contraction during charging and discharging, and that a secondary battery that maintains excellent battery performance properties can be manufactured by including such a negative electrode layer.

**Claims**

1. A method of manufacturing a porous silicon, comprising:

   bringing a raw material containing a silicate into contact with an alkali earth metal gas; and
   bringing the raw material, which was brought into contact with the alkali earth metal gas, into contact with an acid.

2. The method of manufacturing a porous silicon of claim 1, wherein the silicate is an alkali metal silicate.

3. The method of manufacturing a porous silicon of claim 1 or 2, wherein the silicate is at least one compound selected from the group consisting of sodium silicate and lithium silicate.

4. The method of manufacturing a porous silicon of any one of claims 1 to 3, wherein the silicate is sodium silicate.

5. The method of manufacturing a porous silicon of any one of claims 1 to 4, wherein the alkali earth metal gas is a magnesium gas.

6. A porous silicon, wherein:

a void ratio calculated from a pore volume measured using a Barrett-Joyner-Halenda method (BJH method) is 66% or higher; and
the porous silicon comprises an alkali metal at a content of 0.5% by mass or higher.

7. The porous silicon of claim 6, wherein the alkali metal is at least one chemical element selected from the group consisting of sodium and lithium.

8. The porous silicon of claim 6 or 7, wherein the pore volume is 0.8 $cm^3/g$ or higher.

9. The porous silicon of any one of claims 6 to 8, wherein a mean pore size is 15 nm or less.

10. The porous silicon of any one of claims 6 to 9, wherein a BET specific surface area is 70 $m^2/g$ or higher.

11. A negative electrode layer, comprising:

a negative electrode active material layer including
a negative electrode current collector, and
the porous silicon of any one claims 6 to 10 as a negative electrode active material arranged on one face or both faces of the negative electrode current collector.

12. A secondary battery (1), comprising:

the negative electrode layer (3) of claim 11;
a positive electrode layer (2) including a positive electrode current collector (5) and a positive electrode active material layer (6), the positive electrode active material layer containing a positive electrode active material arranged on one face or both faces of the positive electrode current collector (5); and
an electrolyte layer (4) arranged between the negative electrode layer (3) and the positive electrode layer (2).

13. The secondary battery of claim 12, wherein the electrolyte layer includes a solid electrolyte.

FIG.1

# FIG.2

# FIG.3

FIG.4

Europäisches
Patentamt
European
Patent Office
Office européen
des brevets

# EUROPEAN SEARCH REPORT

**Application Number**

EP 25 21 2581

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | JP 2023 076283 A (TOYOTA IND CORP) 1 June 2023 (2023-06-01) * paragraph [0010] - paragraph [0039]; claims 1-5 * | 1-10 | INV. C01B33/021 C01B33/00 C01B33/023 H01M4/134 H01M4/38 |
| X | WO 2015/157538 A1 (CORNING INC [US]) 15 October 2015 (2015-10-15) * paragraph [0001] - paragraph [0054]; table 1 * | 6-13 | |
| A | EP 4 112 548 A1 (UNIV DONG A RES FOUND FOR IND ACAD COOP [KR]) 4 January 2023 (2023-01-04) | 1-13 | |
| A | CN 107 628 622 A (SHANGHAI INST CERAMICS CAS; TIANJIN HYSCI NANO MAT CO LTD) 26 January 2018 (2018-01-26) | 1-13 | |
| A | KR 2004 0082876 A (LG CHEMICAL LTD) 30 September 2004 (2004-09-30) | 1-13 | |

**TECHNICAL FIELDS SEARCHED (IPC)**

C01B
H01M

The present search report has been drawn up for all claims

| Place of search | Date of completion of the search | Examiner |
|---|---|---|
| The Hague | 31 March 2026 | Alex, Jennifer |

CATEGORY OF CITED DOCUMENTS

X : particularly relevant if taken alone
Y : particularly relevant if combined with another
　document of the same category
A : technological background
O : non-written disclosure
P : intermediate document

T : theory or principle underlying the invention
E : earlier patent document, but published on, or
　after the filing date
D : document cited in the application
L : document cited for other reasons

& : member of the same patent family, corresponding
　document

EPO FORM 1503 03.82 (P04C01)

## ANNEX TO THE EUROPEAN SEARCH REPORT
## ON EUROPEAN PATENT APPLICATION NO.

EP 25 21 2581

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2026

| Patent document cited in search report | | | Publication date | Patent family member(s) | | Publication date |
|---|---|---|---|---|---|---|
| JP 2023076283 | A | | 01-06-2023 | JP 7704013 | B2 | 08-07-2025 |
| | | | | JP 2023076283 | A | 01-06-2023 |
| WO 2015157538 | A1 | | 15-10-2015 | CN 106463702 | A | 22-02-2017 |
| | | | | EP 3130023 | A1 | 15-02-2017 |
| | | | | JP 2017514273 | A | 01-06-2017 |
| | | | | KR 20160142863 | A | 13-12-2016 |
| | | | | US 2017033353 | A1 | 02-02-2017 |
| | | | | WO 2015157538 | A1 | 15-10-2015 |
| EP 4112548 | A1 | | 04-01-2023 | EP 4112548 | A1 | 04-01-2023 |
| | | | | KR 20210120365 | A | 07-10-2021 |
| | | | | US 2023142512 | A1 | 11-05-2023 |
| | | | | WO 2021194149 | A1 | 30-09-2021 |
| CN 107628622 | A | | 26-01-2018 | NONE | | |
| KR 20040082876 | A | | 30-09-2004 | NONE | | |

EPO FORM P0459

For more details about this annex : see Official Journal of the European Patent Office, No. 12/82

**EP 4 748 791 A1**

**Patent documents cited in the description**

- JP 2023076283 A